# EUROPEAN PATENT SPECIFICATION

(11) **EP 0 809 583 B1**
(45) Date of publication and mention of the grant of the patent: **03.02.1999**
(21) Application number: 96904368.6
(22) Date of filing: 23.02.1996
(51) Int. Cl.: B62H 3/00, B62H 5/00

(54) **ANTI-THEFT DEVICE, PARTICULARLY FOR TWO-WHEELERS SUCH AS MOTOR-BIKES, BICYCLES AND SUCH LIKE**
DIEBSTAHLSICHERUNG, INSBESONDERE FÜR ZWEIRÄDER WIE MOTORRÄDER, FAHRRÄDER UND DERGLEICHEN
DISPOSITIF ANTIVOL POUR DEUX-ROUES TELS QUE MOTOCYCLETTES ET BICYCLETTES

(30) Priority: 23.02.1995 NL 9500353
(43) Date of publication of application: 03.12.1997
(73) Proprietor: Heuwest Beheer B.V., NL-3811 MB Amersfoort (NL)
(72) Inventor: VAN HEUGTEN, Theodoor, Maria, NL-3781 NM Voorthuizen (NL)
(74) Representative: De Hoop, Eric
(86) International application number: NL9600089
(87) International publication number: WO9626101

(56) References cited:
- FR-A- 2 695 614
- US-A- 3 834 825
- US-A- 4 964 355

## Description

The invention relates to a device for securing to a fixed body a locking system such as a chain, bracket, folding or cable lock to therewith protect an object such a motor-bike, moped, bicycle or such like from theft. More and more often, merely locking two-wheelers has proved to offer insufficient protection from theft.

Bicycle racks are often available to park bicycles on the pavement in a way that offers a certain degree of ensurance against theft. Here, the bicycles are placed into the rack with their front wheels and fastened to the rack by means of a bracket lock, for instance. However, the front wheel is easily uncoupled from the frame, so that the frame can still be removed. Motor-bikes and mopeds do not fit into bicycle racks, so that they are often parked apart on the pavement and have to be protected from theft separately with the aid of locks. Although a motor-bike or moped could be secured to a lamppost, for instance, or to other street furnishings, such furnishings are not always or not sufficiently present at the place of parking. Moreover, two-wheelers secured here and there offer a slovenly sight and may hinder pedestrians.

With the increasing popularity of expensive two-wheelers, particularly mopeds and motor-bikes, the need for secure parking facilities besides the so-called guarded storages has grown. This need has been met to a large extent by the so-called Heulock®-system. This system, the rights for which have been applied for by way of a previous patent application, comprises a concrete body that is provided with a sleeve in which a solid chain is accommodated. At its upper side, the sleeve is closed by means of a lid that lies flush with the upper side of the concrete body, which, at the upper side, has the dimensions of a normal paving-tile. Immediately below the lid there is an upper chamber in which the upper link or ring of the chain is accommodated and is retained against falling down. When the user raises the lid, he may take hold of this link or ring and pull it up, causing the chain that is accommodated in the sleeve to emerge from the sleeve through a hole in the bottom of the upper chamber, yet not entirely, owing to the fact that the lower end of the chain is provided with retaining means, such as a cross-bar. The user may then place the chain around his motor-bike and, with the aid of a lock, such as a simple, yet strong padlock, secure the upper link or ring to one of the other links of the chain. In this way, the motor-bike and such like may be protected from theft, yet in the absence of a motor-bike no part extending from the pavement or being in sight in an annoying way will be present. The Heulock®-device has proved to meet a specific need.

It often occurs that riders of two-wheelers often carry chain or articulated locks or such like with them. They are not really helped with a relatively long chain included in the Heulock®-system. In other words, for them the chain is actually superfluous. In this target group, which is still growing because there is a desire to be able to park a two-wheeler in a safe way at more and more places, which may be done with the aid of an articulated lock or such like, there is a need for a relatively simple fastening means for securing the two-wheeler to a wall or pavement with the aid of an articulated lock, for example.

It is now an object of the invention to attend to this and for that purpose it provides a device for securing to a fixed body a locking system with which an object such a motor-bike, scooter, bicycle or such like, but also a caravan, a trailer or a pile of terrace chairs can be protected from theft, comprising a base member that, in a side facing the object, is provided with a recess and an annular member fitting into the recess, as well as retaining means for the annular member to retain at least a part of it within the recess permanently, in which the retaining means, together with the boundary of the recess, define a passage in which the web of the annular member is retained loosely, yet permanently, in which the annular member is provided with first stop surfaces and the device is further provided with second stop surfaces that cooperate with the first stop surfaces in order to prevent angular displacement of the annular member past a vertical position perpendicular to the plane of said side of the base member.

The motorcyclist, cyclist or other user may take hold of the annular member and insert the articulated lock, for instance, through it and then pass that lock through the frame or through the wheel of his two-wheeler or such like and subsequently lock it. The annular member will then extend slightly upwards. When the two-wheeler or such like is released again, the annular member will not form an obstacle for pedestrians, for example, because the annular member will always fall back into the appropriate recess of its own accord and no longer protrude from the pavement.

The stop means may be configurated in various ways. The second stop surfaces, for instance, may also be formed by a portion of the wall of the recess lying above the annular member, in which the wall of the recess, viewed from above, substantially follows the contours of the annular member, with a slight tolerance thereto. When the annular member is swung upwards, the outer surface of the annular member interferes with the inner surface of said portion of the wall of the recess. The annular member will then tend to rotate about the line that contains both the opposing contact areas between the two stop surfaces. This rotation is prevented by the retaining means, however.

Another or additional possibility is that the first stop means are formed by the surfaces of the passage, in which the dimensions and form of the passage in relation to the cross section of the annular member have been chosen to prevent angular displacement of the annular member past a position perpendicular to said plane of the base member. Here too, the annular member, when it is swung upwards, will be retained or clamped at an angular position of less than 90° with respect to said plane of the base member, so that it will fall back into the recess of its own accord. It will be clear that a variety of form relations are suitable for this.

Furthermore, the device preferably comprises supporting means for keeping at least a part of the annular member at a distance from the bottom of the recess, so that this can easily be taken hold of by hand.

According to a simple preferred embodiment, the retaining means comprise a stem and a bar portion extending transversely thereto, in which the stem with its lower end is attached in the fixed body and the bar portion extending transversely on the stem extends upto or into a side wall of the recess.

The supporting means are preferably formed by another bar portion, extending transversely onto the stem, which bar portion is located on the side of the stem facing away from the afore-mentioned portion. In this case, a substantially T-shaped member is used that is easy to manufacture, out of steel, for instance.

The recess is preferably formed by a cup-shaped steel plate portion. The lower end of the stem can then be welded to the bottom of the recess.

Alternatively, the stem can be formed by a nut or such like, of which the threaded bore is aligned with a hole in the bottom of the cup, in which a thread screw is inserted from the other side of the bottom through the hole and is screwed into the nut in order to tighten the stem against the bottom. This arrangement can also be kinematically reversed, in the sense that the stem forms a screw shank onto which a nut is screwed while the bottom of the cup is clamped inbetween. Instead of the latter nut, a striking anchor may also be used that has previously been placed into a fixed base and has been anchored and is provided with a matching thread bore. In this way, the cup and the stem and the remainder of the device are also anchored.

At the lower side of the cup the device may be provided with co-screwed or mounted anchoring means. In the first place, the afore-mentioned striking anchor can be considered. An embodiment may also be mentioned, in which a concrete anchor, provided with a hole for the bolt shank, is clamped between a nut or bolt head and the lower side of the recess cup. These anchorings make the device suitable for installment by private persons. They can easily anchor the device to a fixed base themselves or to a block of concrete that has to be poured, the weight and/or dimensions of which may be chosen in dependence on the object that has to be protected.

In the second place, a pipe located on the lower end of the cup can be considered, which pipe is provided with protruding plates and such like that may be welded thereon and serve for anchoring, thus preventing the pipe and the cup from being pulled out of a base of concrete, for example, such as a concrete tile. The pipe can then protrude over the nut or bolt head, if present, so that this is kept free from concrete and is not prevented from being rotated when a thief rotates the cup in an attempt to loosen it from the base.

When the fixed body is formed like a tile, it can be provided with a through hole extending in vertical direction, in which the cup-shaped steel plate member is provided with an elongated pipe that extends through the tile into the hole up to the side opposite to the cup and is there brought into engagement with a further anchoring and/or weighting portion. This anchoring member can, for instance, be a bolt that then cooperates with an inner thread in the lower portion of the sleeve. As a result, the cup-shaped steel plate member is ensured against raising. Rotation of the cup-shaped recess with respect to the base member is counteracted by suitable adhesives between the cup-shaped steel plate member and the base member.

The subject matter of the application will now be elucidated with the aid of a number of embodiments depicted in the enclosed drawing. The following is shown:
figure 1 shows a tile viewed from above with a sunk ring for securing a locking system;
figure 2 shows a diagrammatical vertical cross section according to II-II in figure 1;
figure 3 shows a cross section comparable to figure 2, now in the position of use, however;
figure 3A shows an example of the device of figure 1, accommodated in a concrete block;
figure 4 shows a diagrammatical representation of a pavement, comprising a number of tiles substantially according to figures 1 - 3;
figures 4A and 4B show two alternatives for extra anchorage of the system of figure 4; and
figures 5A and 5B show two embodiments of the device according to the invention, particularly suitable for do-it-yourselfers.

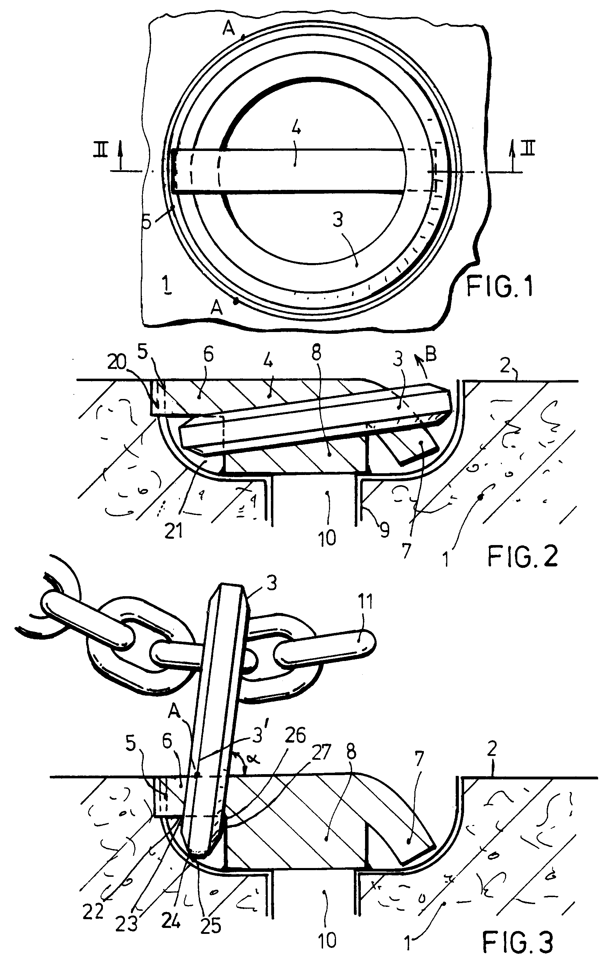

In figures 1 and 2 a top view and a cross section of a concrete tile 1 is depicted, respectively, which concrete tile has an upper surface 2 that is intended to lie in one plane with the upper plane of existing paving. The upper surface 2 has dimensions that correspond with the dimensions of the tiles of the remaining pavement, particularly the dimensions 30 x 30 cm.

In the tile 1 a recess 20 is made, in which a tightly fitting steel plate cup 5 is arranged. The cup 5 has a horizontal cross section that is circular.

In the cup a retaining member 4 is arranged that, as can be seen in figure 2, is substantially T-shaped and is provided on the one side with a co-formed supporting member 7, bended downwards and, on the opposite side, is provided with a confining arm 6 protruding sideways. The stem 8 of the retaining member 4, together with the retaining arm 6 and the wall of the cup 5, forms a passage 21 through which the ring 3 is led. At its other side, this ring 3 is supported by the supporting member 7, as can be seem in figure 2. In this position the ring 3 is located beneath the plane 2, so that no obstacle is formed.

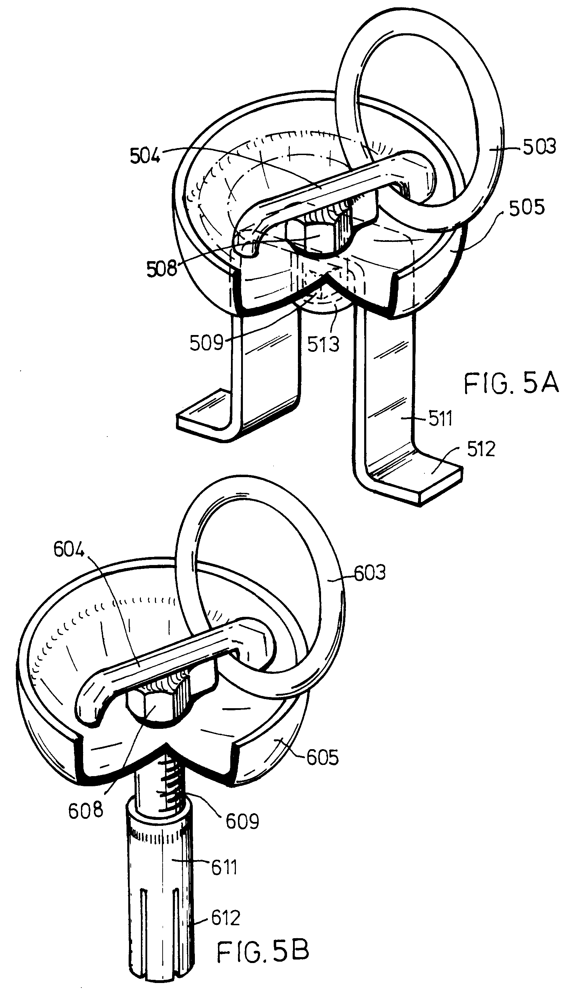

At its lower side, the stem 8 may be fastened to the bottom of the cup 5 by welding or may merge into the extended stem 10 that is accommodated in the bore 9 of the tile 1, and may be fastened therein with the aid of adhesives, for example. In this case the bottom of the cup 5 is provided with a hole that is suitable for feeding through the elongated stem 10. Alternatives are depicted in figures 5A and 5B.

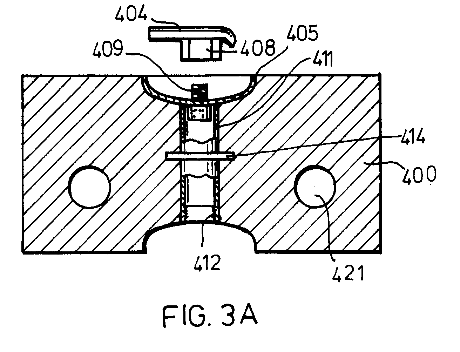

When a motorcyclist wishes to park his motor-bike, a cyclist his bicycle, etc. he removes the chain 11 or such like from the case of his motor-bike (not depicted) and then, with two fingers, engages in the ring 3 at both sides of the supporting member 7 in order to tilt it upwards in the direction B. By doing so, the ring is rotated within the passage 21 until the position in figure 3 is reached. In this position the ring 3 cannot tilt any further because of the contact between the circumferential surface 3' of the ring and the inner surface of the wall of the cup 5, at the points A, depicted in figure 1 and figure 3, which are here situated on a line that extends transversely to the plane in which the ring is rotated. In this position, the ring 3 is further prevented from continued rotation by abutment of the surface part 24 of the circumferential surface 3' of the ring 3 against the surface area 25 in the transition area of the wall to the bottom of the cup 5, as well as by abutment of the surface area 26 of the ring 3 against the surface area 27 in the side surface of the stem 8. Instead of the contact on the points A, arrangements may be made to design the passage 21 in relation to the cross section of the ring 3 in such a way that the ring 3, with surface area 22, abuts against surface area 23 at the lower side of the retaining arm 6.

In the position depicted in figure 3, the motor-cyclist may insert the chain 11 through the ring 3 and, with the aid of a padlock, close the chain 11 in the form of a loop, by which the motor-bike will then be protected from theft. The ring 3 will then tilt to a more horizontal position and rest upon chain 11 that is itself locally resting upon the upper face of the T-shaped retaining member and the plane 2 of the tile 1.

When the chain 11 is removed by the motor-cyclist the ring 3, owing to the fact that angle α will always be smaller than 90°, will tilt to a substantially horizontal position of its own accord and again take up the position depicted in figure 2.

Figure 3A depicts a prefabricated concrete tile 400 that is provided with through holes 421 for anchoring bars to therewith be further anchored in the surrounding base. At the upper side of the tile 44 an assembly comparable to that of figure 1 is accommodated, comprising the cup 405 that, in its bottom, is provided with a hole through which a thread screw 409 is inserted, on the shank of which retaining member 404, with its shank 408 constructed as a nut member, is screwed. A ring comparable to ring 3 has been omitted here, but it should be understood that it will be present.

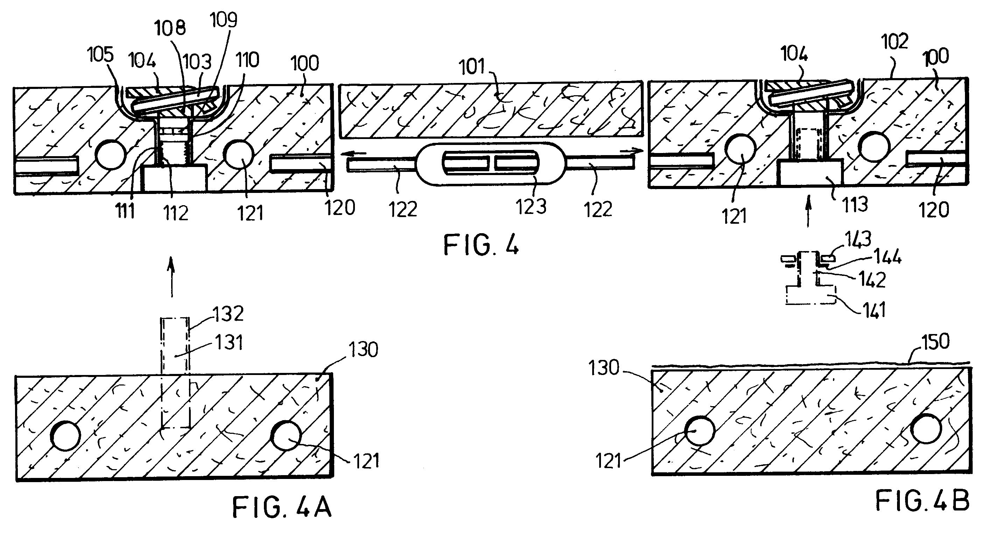

At the lower side, the cup 405 is provided with a pipe 411 welded thereto, which pipe engages over the head of bolt 409. At its circumference, the pipe 411 is provided with a flange 414 for anchoring in the tile 400. At the lower end, a recess is provided to facilitate the piling of a number of tiles 400. At the end of the pipe 411 near the recess an inner thread 412 is provided, into which anchoring means or weighting means may be screwed down. Vide the discussion of figures 4A and 4B for this.

In figure 4 a paving system is depicted, in which a number of tiles, comparable with tile 1 of figure 1, are included. Here, it is envisaged to prevent, in a far-reaching way, an unauthorized person who is confronted with a motor-bike fastened in a secure way, from deciding to remove the motor-bike along with the chain and tile.

The tiles 100 of which a great deal more may of course be included in the system, are, as is diagrammatically depicted, fastened against one another by means of threaded studs 122 that, at their end, are accommodated in a turn-buckle 123 and, at their other end, are accommodated by a threaded connection in threaded blind bores 120. By operating the turnbuckle 123 both the tiles 100 may be secured at the proper intermediate distance. The bores 120 are arranged at such a height with respect to the upper surface 102 of the tiles 100 that an ordinary concrete tile 101 may be placed on top of it with its upper surface in one plane with the upper surface 102 of the tiles 100. The tiles 100 may be provided with bores 120 on their four sides, so that the system may be extended in all directions.

The tiles 100 are furthermore provided with through bores 121, in which (non-depicted) bars, cables or such like may be accommodated, which protrude from the sides of the tiles 100 for anchorage of the tiles 100 in the ground, which might be approprate in the case of individual tiles. The through bores 121 also offer the possibility of coupling tiles 100 together, however, by making the bars, cables or such like that are inserted through the holes 121 so long that they extend through several tiles 100. In this way a individual tile 100 is ensured against removal.

The tiles 100 are furthermore provided with a retaining member 104 that is substantially equal to the retaining member 4 of figures 1 - 3, as well as a ring 103, retained thereby, and a steel plate cup 105. At its lower end, this cup 105 is welded to a sleeve 111 that is anchored into the concrete of the tiles 100. In the upper portion of the sleeve 111, the nut 109 is tightened onto the stem 108, particularly its extension 110 that is inserted through a hole in the bottom of the cup. At its lower end, the sleeve 111 in its inner surface is provided with a thread 112 in which (vide figure 4A) threaded stud 131 may be screwed down with its thread 132. The threaded stud 131 is poured down in weighting block 130, by which, after the tile has been fastened as described, removal of the tile 100 is rendered more difficult. This can be effected as a supplement to the system of figure 4 or as an alternative thereof. The block 130 is also provided with through holes 121 for accommodating the bars discussed above.

An alternative is depicted in figure 4B; this block may be fastened to the lower face of the tile 100 with the aid of adhesive 150, thus weighting tile 100 with a view to making removal thereof more difficult.

When, in the solution of figure 4A, the block 130 is fastened to the tile 100, the sleeve 111 and therewith with the cup 105 and the retaining member 104 will be additionally ensured against removal. In figure 4B this takes place in another way because there a bolt 141 is used that, with threaded portion 142, is screwed into the threaded portion 112 while retaining a retaining ring 143 and a spring ring 144 at the same time. The head of the bolt 141 fits into recess 113.

In figure 5A a cup 505 is depicted to which a fastening ring 503 for chain locks and such like is movably fastened by means of bracket 504, which is welded to nut 508 that is fastened to the bottom of the cup 505 by means of thread screw 509 that, from below, extends up through a hole in the bottom of the cup 505. Also between the lower side of the bottom of the cup 505 and the head of the bolt 509 a substantially U-shaped anchoring strip 511 is clamped, which strip 511 is provided with bent outer ends 512. The device depicted in figure 5A is suitable to work just like the device depicted in figures 1 - 3. The device depicted in figure 5A may be sold to private persons who may take this handy object back home with them from the hardware shop and may put it in at the desired place in a mass of concrete that is to be poured by themselves. The bent outer ends 512 of the strip 511 then form anchoring means. In the middle portion, at the top, the anchoring strip 511 is provided with a collar extending downwards that surrounds the bolt head in order to keep it free of mortar.

An alternative that is also suitable for the do-it-yourselfer is depicted in figure 5B. Here, the retaining means 604 for the ring 603 are fastened to the cup 605, this time by means of bolt 609, the head of which butts against the upper side of the bottom of the cup 605 and the shank of which extends downwards through a hole in the bottom of cup 605. This shank 609 may be screwed down in a striking anchor 611 that, together with the end 612 that has to be widened, may be inserted into a bore hole made by the do-it-yourselfer himself, for example in a wall. After the striking anchor (M12), by having the eind 612 widened, is secured in the bore hole, the shank 609 together with the cup 605 may be fastened to the base in question, a wall for instance. Just as in figure 5A and the figures discussed above, the ring will be able to fall neatly back into the cup.

## Claims

1. A device for securing to a fixed body (1) a locking system to therewith protect an object such as a motor-bike, bicycle or such like from theft, comprising a base member (1; 5) that, in a side (2) facing the object, is provided with a recess (20) and an annular member (3) fitting into the recess, as well as retaining means (4) for the annular member to retain at least a part of it within the recess permanently, wherein the retaining means, with the boundary of the recess, define a passage (21) in which the web of the annular member is retained loosely, yet permanently, in which the annular member (4) is provided with first stop surfaces (22; 24, 26) and the device is further provided with second stop surfaces (23; 25, 27) that cooperate with the first stop surfaces in order to prevent angular displacement of the annular member past a vertical position perpendicular to the plane of said side of the base member.

2. A device according to claim 1, in which the second stop surfaces are formed by a portion (A) of the wall of the recess (20) lying above the annular member (3), in which the wall of the recess, viewed from above, substantially follows the contours of the annular member, with a slight clearance thereto.

3. A device according to claim 1 or 2, in which the first stop surfaces are formed by the surfaces (25) of the passage, in which the dimensions and form of the passage (21) in relation to the cross section of the annular member (3) have been chosen to prevent angular displacement of the annular member past a position perpendicular to said plane of the base member.

4. A device according to claims 1, 2 or 3, comprising supporting means (7) for keeping at least a part of the annular member (3) at a distance from the bottom of the recess (20).

5. A device according to any one of claims 1 - 4, in which the retaining means (4) comprise a stem and a bar portion (6) extending transversely thereto, in which the stem with its lower end is attached in the fixed body (1) and the bar portion (6) extending transversely on the stem extends upto or into a side wall of the recess (20).

6. A device according to claim 5, in which said supporting means (7) are formed by another bar portion, extending transversely onto the stem, (8) which bar portion is located on the side of the stem facing away from the former bar portion (6).

7. A device according to any one of the previous claims, in which the recess (20) is formed by a cup-shaped steel plate portion (5).

8. A device according to claim 5 or 6, in which the lower end (10) of the stem (8) is secured to the bottom of the recess (20).

9. A device according to any one of the previous claims, in which the base member is formed as a cup (105; 405) in which the retaining (104; 404) means are attached by means of a nut-bolt-connection (108; 109)(408; 409) that is led through a hole in the bottom of the cup, wherein the nut-bolt-connection, at the lower side of the cup, is connected with anchoring means (411, 414).

10. A device according to claim 9, in which the bolt of the nut-bolt-connection (608) forms part of the retaining means (604) and extends downwards through the hole in the cup (605) and is preferably screwed into a striking anchor (611).

11. A device according to claim 9, in which the nut (508) of the nut-bolt-connection forms part of the retaining means (504) and the bolt (509) extends upwards through the hole in the cup (505) and an anchoring means (512, 513), such as a U-strip having bent anchoring ends, clamps against the lower side of the cup.

12. A device according to any one of the previous claims, in which the base member is a cup (105; 405; 505; 605) and, together with retaining means, (104; 404; 504; 604) annular member (103; 403; 503; 603) and anchoring means, if any, forms a separate part that can be placed or poured (concrete) into a fixed body (1; 100; 400).

13. A device according to claim 6, in which the fixed body is formed like a tile, (1) wherein the cup-shaped steel plate (105) member is provided with a sleeve (111) that extends through the tile and, at the side opposite to the cup, is brought into engagement with an anchoring (141) and/or weighting (130) portion.

14. A device according to claim 13, in which the anchoring portion is a bolt (141).

15. A device according to claim 13, in which the anchoring portion is a weight (130) that is provided with a threaded stud (131) fastened securely therein.

## Patentansprüche

1. Vorrichtung zum Befestigen eines Sicherungssystems an einem festen Körper (1), um damit einen Gegenstand, wie beispielsweise ein Motorrad, ein Fahrrad oder dergleichen vor Diebstahl zu schützen, mit einem Basisteil (1; 5), das an einer dem Gegenstand zugewandten Seite (2) mit einer Ausnehmung (20) und einem in die Ausnehmung passenden Ringteil (3) sowie einer Halteeinrichtung (4) für das Ringteil versehen ist, um wenigstens einen Teil desselben permanent in der Ausnehmung zu halten, wobei die Halteeinrichtung mit der Begrenzung der Ausnehmung einen Kanal (21) bildet, in dem ein Abschnitt des Ringteils lose, jedoch permanent gehalten ist, wobei das Ringteil (3) mit ersten Anschlagflächen (22; 24; 26) versehen ist, und die Vorrichtung ferner mit zweiten Anschlagflächen (23; 25; 27) versehen ist, die mit den ersten Anschlagflächen zusammenwirken, um eine Winkelverschiebung des Ringteils über eine zur Ebene der genannten Seite des Basisteils senkrecht verlaufende vertikale Position hinaus zu verhindern.

2. Vorrichtung nach Anspruch 1, bei der die zweiten Anschlagflächen durch einen über dem Ringteil (3) liegenden Teil (A) der Wand der Ausnehmung (20) gebildet sind, wobei die Wand der Ausnehmung in Draufsicht den Konturen des Ringteils mit geringem Spiel im wesentlichen folgt.

3. Vorrichtung nach Anspruch 1 oder 2, bei der die ersten Anschlagflächen durch die Flächen (25) des Kanals gebildet sind, wobei die Abmessungen und die Form des Kanals (21) im Verhältnis zum Querschnitt des Ringteils (3) derart gewählt sind, daß eine Winkelverschiebung des Ringteils über eine zur Ebene der genannten Seite des Basisteils senkrecht verlaufende vertikale Position hinaus verhindert ist.

4. Vorrichtung nach den Ansprüchen 1, 2 oder 3, mit einer Stützeinrichtung (7), um wenigstens einen Teil des Ringteils (3) in einem Abstand vom Boden der Ausnehmung (20) zu halten.

5. Vorrichtung nach einem der Ansprüche 1 - 4, bei der die Halteinrichtung (4) einen Fuß und einen sich quer dazu erstreckenden Stegbereich (6) aufweist, wobei das untere Ende des Fußes am festen Körper (1) befestigt ist und sich der sich in Querrichtung auf den Fuß erstreckende Stegbereich (6) bis zu oder in eine Seitenwand der Ausnehmung (20) erstreckt.

6. Vorrichtung nach Anspruch 5, bei der die Stützeinrichtung (7) durch einen anderen, sich quer auf dem Fuß (8) erstreckenden Stegbereich gebildet ist, welcher auf der dem ersteren Stegbereich (6) abgewandten Seite des Fußes angeordnet ist.

7. Vorrichtung nach einem der vorhergehenden Ansprüche, bei der die Ausnehmung (20) aus einem becherförmigen Stahlplattenteil (5) besteht.

8. Vorrichtung nach Anspruch 5 oder 6, bei der das untere Ende (10) des Fußes (8) am Boden der Ausnehmung (20) befestigt ist.

9. Vorrichtung nach einem der vorhergehenden Ansprüche, bei der das Basisteil als Becher (105; 405) ausgebildet ist, wobei die Halteeinrichtung (104; 404) mittels einer Schraube/Mutter-Verbindung (108; 109) (408; 409) befestigt ist, die durch ein Loch im Boden des Bechers geführt ist, wobei die Schraube/Mutter-Verbindung an der Unterseite des Bechers mit einer Verankerungseinrichtung (411, 414) verbunden ist.

10. Vorrichtung nach Anspruch 9, bei der die Schraube der Schraube/Mutter-Verbindung (608) Teil der Halteeinrichtung (604) ist und sich durch das Loch im Becher (605) nach unten erstreckt und vorzugsweise in einen Schlaganker (611) eingeschraubt ist.

11. Vorrichtung nach Anspruch 9, bei der die Mutter (508) der Schraube/Mutter-Verbindung Teil der Halteeinrichtung (504) ist und die Schraube (509) sich durch das Loch in dem Becher (505) nach oben erstreckt und eine Verankerungseinrichtung (512, 513), beispielsweise ein U-förmigen Bügel mit gebogenen Verankerungsenden, klemmend gegen die Unterseite des Bechers gedrückt wird.

12. Vorrichtung nach einem der vorhergehenden Ansprüche, bei der das Basisteil ein Becher (105; 405; 505; 605) ist, und zusammen mit der Halteeinrichtung (104; 404; 504; 604), dem Ringteil (103; 403; 503; 603) und den Verankerungseinrichtungen, falls vorhanden, ein separates Teil bildet, das in einem feststehenden Körper (1; 100; 400) eingesetzt oder eingegossen (Beton) werden kann.

13. Vorrichtung nach Anspruch 6, bei der der feststehende Körper ähnlich einer Fliese (1) ausgebildet ist, wobei das becherförmige Stahlplattenteil (105) mit einer Buchse (111) versehen ist, die sich durch die Fliese erstreckt und auf der dem Becher abgewandten Seite in Eingriff mit einem Verankerungsteil (141) oder einem Beschwerungsteil (130) gebracht wird.

14. Vorrichtung nach Anspruch 13, bei der das Verankerungsteil eine Schraube (141) ist.

15. Vorrichtung nach Anspruch 13, bei der das Verankerungsteil ein Gewicht (130) ist, das mit einem fest darin angebrachten Gewindestutzen (131) versehen ist.

## Revendications

1. Dispositif pour attacher solidement à un corps fixe (1) un système de verrouillage afin de protéger de cette façon contre le vol un objet tel qu'une motocyclette ou une bicyclette, comportant un organe de base (1, 5) muni, sur le côté faisant face à l'objet, d'un renfoncement (20) et d'un organe annulaire (3) ajusté dans le renfoncement, de même que des moyens de retenue (4) pour l'organe annulaire destinés à retenir de façon permanente au moins une partie de celui-ci à l'intérieur du renfoncement, caractérisé par le fait que les moyens de retenue définissent, avec la limite du renfoncement, un passage (21) dans lequel la structure de l'organe annulaire est retenue avec du jeu, mais de façon permanente, et par le fait que l'organe annulaire (4) est muni de premières surfaces d'arrêt (22, 24, 26), de plus, ce dispositif est muni de secondes surfaces d'arrêt (23, 25, 27) coopérant avec les premières surfaces d'arrêt pour empêcher le déplacement angulaire de l'organe annulaire au-delà de la position verticale perpendiculaire au plan dudit côté de l'organe de base.

2. Dispositif selon la revendication 1, caractérisé par le fait que les secondes surfaces d'arrêt sont formées par une partie (A) de la paroi du renfoncement (20) disposée au-dessus de l'organe annulaire (3), et par le fait que la paroi du renfoncement, vue du dessus, suit sensiblement les contours de l'organe annulaire, avec un petit espace libre jusqu'à celui-ci.

3. Dispositif selon la revendication 1 ou 2, caractérisé par le fait que les premières surfaces d'arrêt sont formées par les parois (25) du passage, et par le fait que les dimensions et les formes du passage (21), par rapport à la coupe transversale de l'organe annulaire (3), ont été choisies pour empêcher le déplacement angulaire de l'organe annulaire au-delà d'une position perpendiculaire audit plan de l'organe de base.

4. Dispositif selon la revendication 1, 2 ou 3, caractérisé par le fait qu'il comporte des moyens de support (7) pour maintenir au moins une partie de l'organe annulaire (3) à une certaine distance du fond du renfoncement (20).

5. Dispositif selon une quelconque des revendications 1 à 4, caractérisé par le fait que les moyens de retenue (4) comportent un axe et une partie de barre (6) s'étendant transversalement jusqu'à celui-ci, par le fait que l'axe est fixé, par son extrémité inférieure, dans le corps fixe (1), et par le fait que la partie de barre (6), s'étendant transversalement sur l'axe, s'étend jusqu'à ou dans la paroi latérale du renfoncement (20).

6. Dispositif selon la revendication 5, caractérisé par le fait que lesdits moyens de support (7) sont formés par une autre partie de barre, s'étendant transversalement à l'axe (8), cette partie de barre étant située du côté opposé à la première partie de barre (6).

7. Dispositif selon une quelconque des revendications précédentes, caractérisé par le fait que le renfoncement (20) est formé d'une partie (5) de plaque d'acier en forme de coupe.

8. Dispositif selon la revendication 5 ou 6, caractérisé par le fait que l'extrémité inférieure (10) de l'axe (8) est attachée solidement au fond du renfoncement (20).

9. Dispositif selon une quelconque des revendications précédentes, caractérisé par le fait que l'organe de base a une forme de coupe (105, 405), par le fait que les moyens de retenue (104, 404) sont fixés par une fixation vis et écrou (108, 109) (408,409) traversant un trou dans le fond de la coupe, et par le fait que la fixation vis et écrou, du côté inférieur de la coupe, est relié avec des moyens d'ancrage (411, 414)

10. Dispositif selon la revendication 9, caractérisé par le fait que la vis de la fixation vis et écrou (608) fait partie des moyens de retenue (604) et s'étendent vers le bas à travers le trou dans la coupe (605) et se trouve vissée, de préférence, dans un ancrage démontable (611).

11. Dispositif selon la revendication 9, caractérisé par le fait que l'écrou (508) de la fixation vis et écrou fait partie des moyens de retenue (504), que la vis (509) s'étend vers le haut à travers le trou dans la coupe (505) et que les moyens d'ancrage (512, 513), tels qu'une bande en U ayant des extrémités d'ancrage recourbées, se plaquent contre le côté inférieur de la coupe.

12. Dispositif selon une quelconque des revendications précédentes, caractérisé par le fait que l'organe de base est une coupe (105, 405, 505, 605) et qu'il forme, avec les moyens de retenue (104, 404, 504, 604), l'organe annulaire (103, 403, 503, 603) et les moyens d'ancrage, s'ils existent, une pièce distincte pouvant être disposée ou coulée (béton) dans un corps fixe (1, 100, 400).

13. Dispositif selon la revendication 6, où le corps fixe a la forme d'une tuile (1), caractérisé par le fait que la plaque d'acier (105) en forme de coupe est munie d'une douille (111) s'étendant à travers la tuile et, du côté opposé à la coupe, qu'elle est rendue solidaire d'une partie d'ancrage (141) et/ou formant lest (130).

14. Dispositif selon la revendication 13, caractérisé par le fait que la partie d'ancrage est une vis (141).

15. Dispositif selon la revendication 13, caractérisé par le fait que la partie d'ancrage est un lest (130) muni d'un clou fileté (131) scellé solidement dans celui-ci.
